# EUROPEAN PATENT APPLICATION

(11) **EP 4 625 504 A1**
(43) Date of publication of application: **01.10.2025**
(21) Application number: 24221653.9
(22) Date of filing: 19.12.2024
(51) Int. Cl.: H01M 4/04, B65B 69/00, B65G 65/32, B65G 69/18

(54) **APPARATUS FOR INTRODUCING ACTIVE MATERIAL FOR USE IN SECONDARY BATTERY**

(30) Priority: 27.03.2024 KR 20240041959
(71) Applicant: SK On Co., Ltd., Seoul 03161 (KR)
(72) Inventor: PARK, Jong Beom, Daejeon 34124 (KR); YANG, Ji Yun, Daejeon 34124 (KR); JEONG, Seong Yun, Daejeon 34124 (KR)
(74) Representative: Bird & Bird LLP

(57) **Abstract**

Proposed is an apparatus for introducing an active material for use in a secondary battery. The apparatus includes a cutting unit positioned on an upper side of an introducing portion of a main hopper and provided for cutting a bottom portion of a packaging material in which a powder is accommodated, and includes a sealing unit provided around an outside of the cutting unit and configured to block leakage of the powder by bringing the introducing portion of the main hopper and an opening portion of the packaging material formed by cutting to be in communication with each other.

## Description

### CROSS REFERENCE TO RELATED APPLICATION

The present application claims priority to Korean Patent Application No. 10-2024-0041959, filed March 27, 2024, the entire contents of which are incorporated herein for all purposes by this reference.

### BACKGROUND

### Technical Field

The present disclosure relates to an apparatus for introducing an active material for use in a secondary battery.

### Description of the Related Art

A secondary battery is a battery capable of performing charging and discharging, and may include a positive electrode on which a positive electrode active material is applied, a negative electrode on which a negative electrode active material is applied, and a separator and an electrolyte interposed between the positive electrode and the negative electrode. In a manufacturing process of the secondary battery, it is necessary to transfer and mix an electrode active material in a powder state, the electrode active material including the positive electrode active material or the negative electrode active material.

The active material for the secondary battery may be contained in a standardized packaging material (for example, a ton bag) and then stored in a hopper through a transporting mechanism. Generally, the packaging material such as the ton bag may be provided in two layers of an inner layer and an outer layer. The outer layer may be opened by untying a knot tied to the bottom of the outer layer, and the inner layer contained inside the outer layer may be cut by cutting or penetrating a bottom portion of the inner layer through a separate knife after the outer layer is opened.

When the ton bag containing the active material in the powder state is moved above the hopper, the outer layer is opened by untying the knot at the bottom of the outer layer, and the bottom of the inner layer is cut, so that the powder contained in the ton bag may fall and may be stored in the hopper.

### Document of Related Art

### (Patent Document 1) KR 10-2610970 B1

### SUMMARY

According to an aspect of the present disclosure, there is provided an apparatus for introducing an active material for use in a secondary battery, the apparatus preventing loss of raw materials by blocking leakage of the active material during transporting the active material in a powder state from a packaging material to a hopper.

According to another aspect of the present disclosure, there is provided an apparatus for introducing an active material for use in a secondary battery, the apparatus preventing a situation in which an active material powder is scattered and is contaminating a surrounding work area.

According to still another aspect of the present disclosure, there is provided an apparatus for introducing an active material for use in a secondary battery, the apparatus being configured to recover a leaked active material and to resupply the leaked active material to a hopper, thereby secondarily preventing the loss of raw materials.

According to yet another aspect of the present disclosure, there is provided an apparatus for introducing an active material for use in a secondary battery, the apparatus being capable of being widely applied in the fields of green technology such as electric vehicles, battery charging stations, and other solar photovoltaic power generation using batteries, wind power generation, and so on.

According to an embodiment of the present disclosure, there is provided an apparatus for introducing an active material for use in a secondary battery, the apparatus including: a cutting unit positioned on an upper side of an introducing portion of a main hopper and provided for cutting a bottom portion of a packaging material in which a powder is accommodated; and a sealing unit provided around an outside of the cutting unit and configured to block leakage of the powder by bringing the introducing portion of the main hopper and an opening portion of the packaging material formed by cutting to be in communication with each other.

Here, the cutting unit may include a knife member that protrudes toward the bottom portion of the packaging material.

In addition, the knife member may be provided such that a height of the knife member is capable of being adjusted.

In addition, the knife member may include a peak portion for cutting a bottom portion of an inner layer of the packaging material.

In addition, the sealing unit may include: a lower flange portion provided on the outside of the cutting unit so as to surround the cutting unit, the lower flange portion being provided such that a lower side of a skirt portion of an outer layer of the packaging material is positioned outside the lower flange portion; and an upper flange portion positioned above the lower flange portion, the upper flange portion being provided with a penetration portion such that the lower side of the skirt portion of the outer layer of the packaging material is passing through and is positioned inside the penetration portion.

In addition, at least one of the lower flange portion and the upper flange portion may be provided such that at least one of the lower flange portion and the upper flange portion is capable of being lifted toward each other, and the lower flange portion and the upper flange portion may be configured to be brought into close contact with each other so that the lower side of the skirt portion of the outer layer of the packaging material moving to the outside of the lower flange portion from inside of the upper flange portion is pressed and fixed.

According to another embodiment of the present disclosure, the apparatus for introducing the active material for use in the secondary battery may further include a recovery unit provided so as to surround the sealing unit from an outside of the sealing unit, the recovery unit being configured to resupply the powder leaked from the packaging material to the main hopper.

Here, the recovery unit may include: a drum portion surrounding the sealing unit from outside the sealing unit and having an accommodating space in which the powder that is leaked is introduced and accommodated; a collecting hopper provided so as to be in communication with the main hopper and connected to the drum portion by at least one pressure line, the collecting hopper being configured to collect the powder in the drum portion; and a pressure generator configured to provide a pressure to the collecting hopper so that the powder in the drum portion is moved to the collecting hopper.

In addition, the drum portion may include at least two partition space portions partitioning and dividing the accommodating space into a plurality of spaces, and at least one of the pressure line may be in communication with each of the partition space portions.

In addition, a plurality of inlet ports for introducing the powder into the accommodating space may be provided on an inner circumferential surface of the drum portion.

In addition, the recovery unit may further include a vibrator provided so as to transmit vibration to the drum portion so that the powder attached to at least one of the drum portion and the inlet portions is detached from at least one of the drum portion and the inlet portions.

In addition, a mesh portion for filtering out foreign substances contained in the powder may be provided between the cutting unit and the introducing portion of the main hopper.

In addition, the recovery unit may further include: a dust collector disposed on a first side of the collecting hopper in communication with the pressure generator, the dust collector being configured to pass air therethrough and to filter out the powder; and a collecting valve portion provided on a communication region of the collecting hopper and the main hopper, the collecting valve portion being capable of being opened and closed.

The features and advantages of the present disclosure will be more clearly understood from the following detailed description based on the accompanying drawings.

The terms and words used in the present specification and claims should not be interpreted as being limited to typical meanings and dictionary definitions, but should be interpreted as having meanings and concepts relevant to the technical scope of the present disclosure based on the rule according to which an inventor can appropriately define the concept of the term to describe most appropriately the best method he or she knows for carrying out the present disclosure.

According to an embodiment of the present disclosure, leakage of the active material may be fundamentally blocked, thereby being capable of preventing loss of raw materials.

In addition, the situation in which the active material powder is scattered and is contaminating the surrounding work area may be prevented.

In addition, the leaked active material may be recovered and resupplied to the hopper, thereby being capable of increasing the active material recovery efficiency.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a side view illustrating an apparatus for introducing an active material for use in a secondary battery according to an embodiment of the present disclosure;
FIG. 2A is a plan view illustrating an embodiment of a knife member viewed from line A-A in FIG. 1;
FIG. 2B is a plan view illustrating another embodiment of the knife member viewed from line A-A in FIG. 1;
FIG. 3 is a view schematically illustrating a drum portion that is capable of being used in a recovery unit of the apparatus for introducing the active material for use in the secondary battery according to an embodiment of the present disclosure;
FIG. 4 is a plan cross-sectional view illustrating the drum portion taken along line B-B in FIG. 3; and
FIG. 5 is a view illustrating an action state of the apparatus for introducing the active material for use in the secondary battery according to an embodiment of the present disclosure.

### DETAILED DESCRIPTION

The terms used in the present disclosure are used to describe an embodiment, and are not intended to limit the present disclosure. Singular expressions include plural expressions unless the context clearly indicates otherwise.

In adding reference numerals to components throughout the drawings, it is to be noted that like or similar reference numerals designate like or similar components even though the components are illustrated in different drawings.

The drawings may be exaggerated or shown schematically for description of an embodiment. In the present disclosure disclosed herein, the expressions "have", "may have", "include", and "comprise", or "may include" and "may comprise" used herein indicate existence of corresponding features (e.g., elements such as numeric values, functions, operations, or components) but do not exclude presence of additional features.

The terms "one", "other", "another", "first", "second", and so on are used to differentiate one constituent element from another constituent element, and these constituent elements should not be limited by these terms.

Hereinafter, an embodiment of the present disclosure will be described in detail with reference to the accompanying drawings.

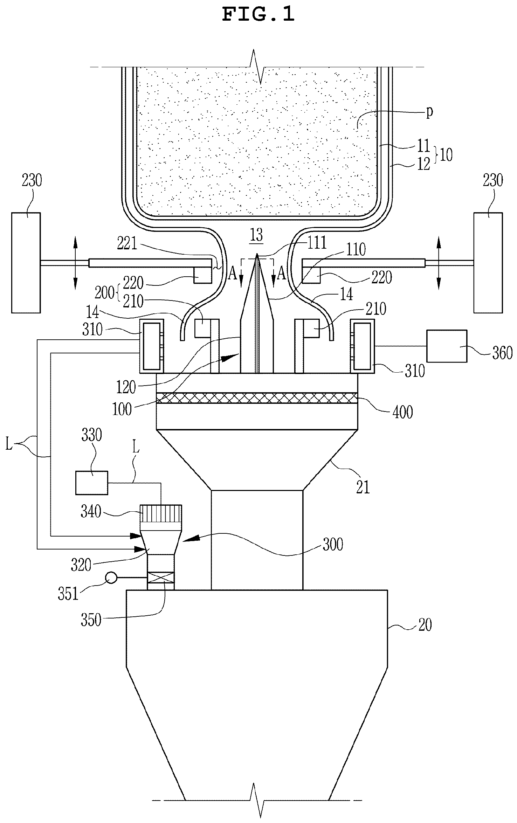

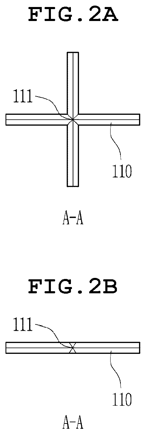

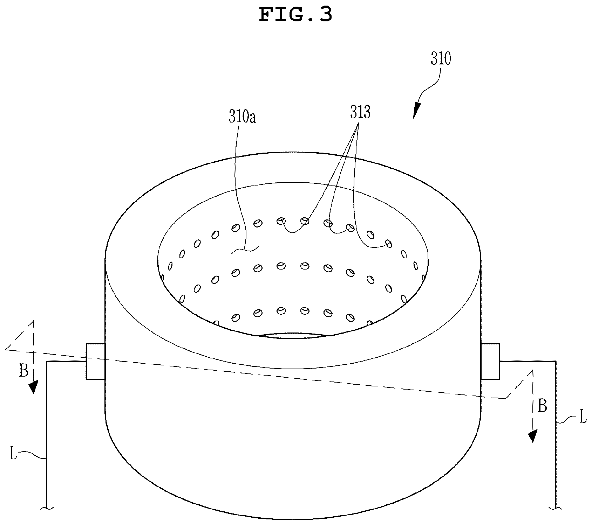

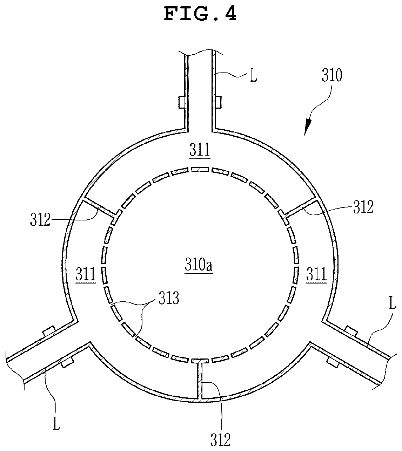

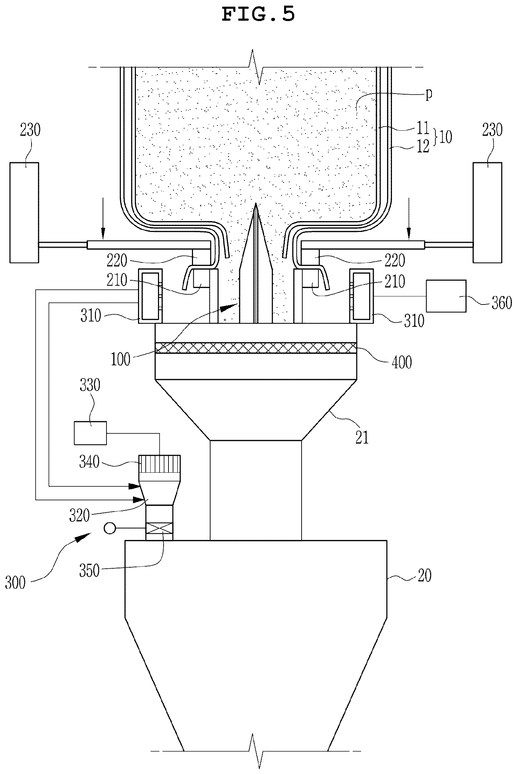

FIG. 1 is a side view illustrating an apparatus for introducing an active material for use in a secondary battery according to an embodiment of the present disclosure, FIG. 2A is a plan view illustrating an embodiment of a knife member viewed from line A-A in FIG. 1, FIG. 2B is a plan view illustrating another embodiment of the knife member viewed from line A-A in FIG. 1, FIG. 3 is a view schematically illustrating a drum portion that is capable of being used in a recovery unit of the apparatus for introducing the active material for use in the secondary battery according to an embodiment of the present disclosure, FIG. 4 is a plan cross-sectional view illustrating the drum portion taken along line B-B in FIG. 3, and FIG. 5 is a view illustrating an action state of the apparatus for introducing the active material for use in the secondary battery according to an embodiment of the present disclosure.

An apparatus for introducing an active material for use in a secondary battery according to an embodiment of the present disclosure may include a cutting unit 100 and a sealing unit 200. In addition, the apparatus for introducing the active material for use in the secondary battery according to another embodiment may further include a recovery unit 300 in addition to the cutting unit 100 and the sealing unit 200.

The apparatus for introducing the active material for use in the secondary battery according to an embodiment of the present disclosure may include: the cutting unit 100 positioned on an upper side of an introducing portion 21 of a main hopper 20 and provided so as to cut a bottom portion of a packaging material 10 in which a powder p is accommodated; and the sealing unit 200 provided around an outer side of the cutting unit 100 and configured such that an opening portion 13 of the packaging material 10 formed by cutting and the introducing portion 21 of the main hopper 20 are in communication with each other so that leaking of the power p is blocked.

Referring to FIG. 1, the cutting unit 100 may be positioned on the upper side of the introducing portion 21 of the main hopper 20. Specifically, the cutting unit 100 may be positioned between the packaging material 10 (the term "packaging material 10" in the present disclosure may be used interchangeably with the term "ton bag") in which an active material powder (hereinafter, abbreviated as "powder p") is accommodated and the introducing portion 21 of the main hopper 20 which is disposed below the packaging material 10.

The cutting unit 100 may be provided for cutting the bottom portion of the packaging material 10 from a downward side of the packaging material 10. Accordingly, the cutting unit 100 may be mounted on the upper side of the introducing portion 21 provided on the main hopper 20. Here, the downward side may be defined as a direction toward a lower portion in the drawing when the accompanying drawing is viewed from the front, and an upward side may be defined as a direction toward an upper portion in the drawing.

In order to cut the bottom portion of the packaging material 10, the cutting unit 100 may protrude toward the bottom portion of the packaging material 10 by a predetermined height. In this state, when the packaging material 10 in which the powder p is accommodated is lowered, the packaging material 10 may be cut by the cutting unit 100 due to the weight of the packaging material 10. The packaging material 10 may be lifted by a separate lifting mechanism (for example, a hoist) that is not illustrated.

Specifically, the cutting unit 100 may include a knife member 110 that protrudes toward the bottom portion of the packaging material 10. The knife member 110 may be provided such that a height of the knife member 110 is capable of being adjusted.

The cutting unit 100 may be provided only as the knife member 110. At this time, for adjusting the height of the knife member 110, the knife member 110 may be provided as a plurality of knife members 110 having heights different from each other, and any one of the plurality of knife members 110 having an appropriate height may be selected and provided.

In addition to the knife member 110, the cutting unit 100 may further include another configuration. When the cutting unit 100 further includes another configuration, the cutting unit 100 may further include a base member 120 disposed at a lower side of the knife member 110.

The base member 120 may be provided as a hollow cylindrical shape or a solid cylindrical shape, but the shape of the base member 120 is not necessarily limited thereto, and various other shapes are capable of being provided as the shape of the base member 120.

The base member 120 may be provided so as to adjust the height of the knife member 110 to a height that a user requires. Accordingly, the base member 120 may be provided as a plurality of base members 120 having heights different from each other.

The knife member 110 may be coupled to an upper surface of the base member 120 such that the knife member 110 is capable of being detached from and attached to the upper surface of the base member 120. When the height of the knife member 110 is required to be increased or decreased, the base member 120 corresponding to the height that the user requires may be selected, and the knife member 110 may be coupled to the upper surface of the corresponding base member 120.

The knife member 110 may include a peak portion 111 for cutting an inner layer bottom portion of the packaging material 10. The peak portion 111 may have a shape of a sharp and pointed knife, a sword, or a spear. In the present disclosure, the peak portion 111 may be interpreted as referring to a separate configuration provided on an upper end of the knife member 110, but it is not necessarily limited thereto, and may also possible to be interpreted as referring to the entire knife member 110.

When the packaging material 10 is a ton bag, the packaging material 10 may include an inner layer 11 and an outer layer 12, and the knife member 110 may cut and open the inner layer 11 of the packaging material 10.

Referring to FIG. 2A and FIG. 2B, the peak portion 111 may be provided as a shape having a "+" shape cross-sectional structure or a "-" shape cross-sectional structure. At this time, a distal end of the peak portion 111 may be provided as a sharp vertex shape, and the blade may be provided as a structure in which the blade extends inclinedly in four directions when the peak portion 111 has the "+" shape cross-sectional structure with respect to the vertex, and the blade may be provided as a structure in which the blade extends inclinedly in two directions when the peak portion 111 has the "-" shape cross-sectional structure with respect to the vertex.

Meanwhile, the sealing unit 200 is configured such that the opening portion 13 of the packaging material 10 formed by cutting and the introducing portion 21 of the main hopper 20 are "connected with and in communication with each other" (hereinafter, abbreviated to be described in the term "in communication with"), and may be provided to prevent the powder p from leaking between the opening portion 13 and the introducing portion 21 of the main hopper 20.

The sealing unit 200 may be provided around the outer side of the cutting unit 100. Specifically, the sealing unit 200 may be provided as a structure that surrounds the cutting unit 100 at a position spaced apart from the cutting unit 100 by a predetermined distance in an outer direction.

When the packaging material 10 is the ton bag, the ton bag is provided with two layers that are the outer layer 12 and the inner layer 11. The outer layer 12 of the ton bag may be opened in a manner in which a knot tied to a bottom of the outer layer 12 is untied. Therefore, in the present disclosure, the opening portion 13 of the packaging material 10 may be interpreted as referring to an open space portion generated at a bottom portion of the outer layer 12 of the packaging material 10 by untying the knot of the outer layer 12.

In the present disclosure, a portion of a lower end of the outer layer 12 of the packaging material 10 being in a free end state while the bottom portion of the outer layer 12 of the packaging material 10 is opened may be defined as a skirt portion 14, and an inner space portion of the outer layer 12 of the packaging material 10 surrounded by the skirt portion 14 may be defined as the opening portion 13.

When the skirt portion 14 of the outer layer 12 of the packaging material 10 is fixed by the sealing unit 200, the opening portion 13 of the packaging material 10 may be in communication with the introducing portion 21 of the main hopper 20. In addition, when the inner layer 11 of the packaging material 10 is cut by the cutting unit 100, the powder p accommodated in the inner layer 11 may fall and may enter the introducing portion 21 of the main hopper 20.

The powder p discharged from the inner layer 11 of the packaging material 10 may not leak toward an outside of the outer layer 12 by the sealing unit 200 that holds and fixes the skirt portion 14 of the outer layer 12, and may be introduced into the introducing portion 21 of the main hopper 20.

Specifically, the sealing unit 200 may include: a lower flange portion 210 disposed on the outer side of the cutting unit 100 such that the lower flange portion 210 surrounds the cutting unit 100, the lower flange potion 210 being provided such that a lower side of the skirt portion 14 of the outer layer 12 of the packaging material 10 is positioned on an outside of the lower flange portion 210; and an upper flange portion 220 positioned above the lower flange portion 210 and provided with a penetration portion 221 so that the lower side of the skirt portion 14 of the outer layer 12 passes therethrough and is positioned therein.

For reference, the lower flange portion 210 may be defined as a flange portion that is positioned relatively at a lower side on the drawing, and the upper flange portion 220 may be defined as a flange portion that is positioned relatively at an upper side on the drawing.

The lower flange portion 210 may be positioned below the upper flange portion 220. The lower flange portion 210 may be disposed on the outside of the cutting unit 100 such that the lower flange portion 210 is spaced apart from the cutting unit 100 by a predetermined distance and surrounds the cutting unit 100. The lower side of the skirt portion 14 of the outer layer 12 of the packaging material 10 may be positioned on the outer side of the lower flange portion 210. The lower flange portion 210 may be mounted on the introducing portion 21 of the main hopper 20.

The upper flange portion 220 may be positioned above the lower flange portion 210. The upper flange portion 220 may be provided with the penetration portion 221 such that the lower side of the skirt portion 14 of the outer layer 12 of the packaging material 10 passes through the penetration portion 221 and is positioned inside the penetration portion 221.

That is, the skirt portion 14 of the outer layer 12 of the packaging material 10 may be inserted into the penetration portion 221 of the upper flange portion 220, may penetrate the penetration portion 221 and may passes through a space between the upper flange portion 220 and the lower flange portion 210, and then may be positioned on the outer side of the lower flange portion 210.

In this state, when the upper flange portion 220 and the lower flange portion 210 are in contact with each other, the skirt portion 14 is fixed by the upper flange portion 220 and the lower flange portion 210 so that the skirt portion 14 is not capable of being moved, and the inside of the outer layer 12 of the packaging material 10 may be sealed.

At least one of the lower flange portion 210 and the upper flange portion 220 is provided such that at least one of the lower flange portion 210 and the upper flange portion 2200 is capable of being lifted toward each other, and may be in close contact with each other, thereby being capable of pressing and fixing the lower side of the skirt portion 14 of the outer layer 12 of the packaging material 10 moving toward the outside of the lower flange portion 210 from the inside of the upper flange portion 220.

At least one of the lower flange portion 210 and the upper flange portion 220 may be provided such that at least one of the lower flange portion 210 and the upper flange portion 220 is capable of being lifted toward each other. That is, it is also possible to provide that the lower flange portion 210 is lifted upward and is in contact with the upper flange portion 220, and to provide that the upper flange portion 220 is lowered and is in contact with the lower flange portion 210. In addition, it is possible to provide that the lower flange portion 210 and the upper flange portion 220 are moved toward each other and are in contact with each other, and such a configuration may be appropriately selected according to the needs of a user.

In the present disclosure, it is described and illustrated that the upper flange portion 220 is lowered toward the lower flange portion 210 by a driving cylinder 230, and is in close contact with the lower flange portion 210, thereby fixing the skirt portion 14.

However, this is an example, and at least one of the lower flange portion 210 and the upper flange portion 220 may be provided such that at least one of the lower flange portion 210 and the upper flange portion 220 is capable of being lifted toward each other as described above.

As such, by the close contact between the upper flange portion 220 and the lower flange portion 210, the lower side of the skirt portion 14 of the outer layer 12 of the packaging material 10 moving toward the outside of the lower flange portion 210 from the inside of the upper flange portion 220 may be pressed and fixed by bringing the upper flange portion 220 and the lower flange portion 210 into close contact with each other.

Portions of the upper flange portion 220 and the lower flange portion 210 in contact with each other may be provided with materials different from each other. An elastic member capable of being elastically deformed may be provided in any one of the upper flange portion 220 and the lower flange portion 210, and a metal member may be provided in the other one of the upper flange portion 220 and the lower flange portion 210.

In an embodiment according to the present disclosure, stainless steel may be provided in a contact portion of the upper flange portion 220, and Ethylene Propylene Diene monomer (EPDM) capable of being elastically deformed may be provided in a contact portion of the lower flange portion 210 that is brought into contact with the contact portion of the upper flange portion 220. Accordingly, the sealing performance of the upper flange portion 220 and the lower flange portion 210 may be increased, and the fixing force of the skirt portion 14 may be increased.

The portions of the upper flange portion 220 and the lower flange portion 210 in contact with each other may be provided with grip angles different from each other. Accordingly, by pressing and fixing various sizes and types of packaging materials 10 without leaking the powder p, the sealing performance may be improved.

As an example of having different grip angles of the portions in contact with each other, it is also possible that the upper flange portion 220 and the lower flange portion 210 are provided such that a lower surface of the upper flange portion 220 and an upper surface of the lower flange portion 210 are in contact with each other by facing each other.

In addition, the upper flange portion 220 and the lower flange portion 210 may be disposed such that the upper flange portion 220 and the lower flange portion 210 are not facing each other but are disposed to cross each other so that a side surface of the upper flange portion 220 and a side surface of the lower flange portion 210 are in contact with each other. In this case, it may be advantageous for the sealing performance that the upper flange portion 220 is positioned inside the lower flange portion 210.

Meanwhile, the apparatus for introducing the active material for use in the secondary battery according to another embodiment of the present disclosure may further include the recovery unit 300 provided so as to surround the sealing unit 200 from the outside of the sealing unit 200 and configured to resupply the powder p leaked from the packaging material 10 to the main hopper 20.

As illustrated in FIG. 1, at least some configurations of the recovery unit 300 may be provided so as to surround the sealing unit 200 from the outside of the sealing unit 200. The recovery unit 300 may be provided for collecting and resupplying the powder p that is leaked or scattered from the packaging material 10 to the main hopper 20.

Specifically, the recovery unit 300 may include: a drum portion 310 surrounding the sealing unit 200 from the outside of the sealing unit 200 and having an accommodating space for introducing and accommodating the leaked powder therein; a collecting hopper 320 provided such that the collecting hopper 320 is capable of being in communication with the main hopper 20 and connected to the drum portion 310 by at least one pressure line L, the collecting hopper 320 being configured to collect the powder in the drum portion 310; and a pressure generator 330 configured to provide a pressure to the collecting hopper 320 and to move the powder in the drum portion 310 to the collecting hopper 320.

That is, the recovery unit 300 may include the drum portion 310, the collecting hopper 320, and the pressure generator 330, and may include the pressure lines L that allow each pressure of the configurations is in communication with each other. In addition, the recovery unit 300 may further include a dust collector 340 and a collecting valve portion 350.

Referring to FIG. 3 and FIG. 4, the drum portion 310 may be provided such that the drum portion 310 surrounds the sealing unit 200 (specifically, the lower flange portion 210) from the outside of the sealing unit 200. The drum portion 310 may be disposed such that the drum portion 310 is spaced outward by a predetermined distance from the sealing unit 200 so that the drum portion 310 is not in contact with the sealing unit 200.
a hollow portion 310a having a hollow center portion may be provided in the drum portion 310, and the sealing unit 200 and the cutting unit 100 may be disposed in the hollow portion 310a. The accommodating space for introducing and temporarily accommodating the leaked powder p therein may be provided inside the drum portion 310.

The drum portion 310 may have the accommodating space provided as a space. However, as illustrated in FIG. 4, at least two partition space portions 311 that partition and divide the accommodating space into a plurality of independent spaces may be included.

The drum portion 310 may include at least two partition space portions 311 that partition and divide the accommodating space into the plurality of spaces, and at least one pressure line L may be connected to each partition space portion 311.

The partition space portion 311 may be partitioned through a partition wall 312 from inside one accommodating space. At least one pressure line L may be in communication with each partition space portion 311. Accordingly, in the partition space portion 311, an area in which a fluid is stagnated is minimized compared to the accommodating space provided as one entire space, so that the flow of the fluid is improved and the flow speed is uniformly maintained in the partition space portion 311. As a result, the collecting efficiency of the powder p may be increased.

The partition wall 312 may be provided such that the partition wall 312 has a predetermined phase angle according to the number of partition space portions 311. For example, as illustrated in FIG. 4, when three partition space portions 311 are provided, the partition wall 312 may be provided such that the partition wall 312 has a phase angle of 120 degrees. Furthermore, when two partition space portions 311 are provided, the partition wall 312 may be provided such that the partition wall 312 has a phase angle of 180 degrees. Furthermore, when four partition space portions 311 are provided, the partition wall 312 may be provided such that the partition wall 312 has a phase angle of 90 degrees. The number of the partition space portion 311 is not limited to the contents and drawings described above, and may be appropriately changed as required.

A plurality of inlet ports 313 for introducing the powder p into the accommodating space inside the drum portion 310 may be provided on an inner circumferential surface of the drum portion 310. The inlet port 313 is a configuration provided on the drum portion 310 such that the powder is capable of passing therethrough, may be provided as a hole shape or a slot shape, and may have various arrangements.

As illustrated in FIG. 1, the collecting hopper 320 may be provided such that the collecting hopper 320 is capable of being in communication with the main hopper 20. The collecting hopper 320 is connected to the drum portion 310 through at least one pressure line L, and is capable of collecting the powder p in the drum portion 310.

The pressure line L may transfer the powder p introduced inside the drum portion 310 to the collecting hopper 320 by communicating the accommodating space or the partition space portion 311 of the drum portion 310 with the collecting hopper 320. One or more pressure lines L may be provided as required.

A pressure acting on the pressure line L may be a static pressure higher than an atmospheric pressure, or may be a negative pressure corresponding to a vacuum pressure. Accordingly, the pressure may be appropriately selected and used according to the needs of the user.

The pressure generator 330 provides a pressure to the collecting hopper 320, so that the powder p in the drum portion 310 may be moved to the collecting hopper 320. The pressure generator 330 may be connected to the collecting hopper 320 through the pressure line L.

An example of the pressure generator 330 according to an embodiment of the present disclosure is that a negative pressure is generated so that a vacuum is used. However, according to another embodiment of the present disclosure, it is possible to selectively generate a static pressure as required in addition to the negative pressure.

For example, when the process of transferring the powder p in the drum portion 310 to the collecting hopper 320 by using the vacuum of the pressure generator 330 is repeated, a situation in which the inlet port 313 of the drum portion 310, the pressure line L, and so on are blocked by the powder p may occur. In this situation, the pressure generator 330 may provide a purge function for generating the static pressure in a reverse direction so as to penetrate an area blocked by the powder p. When the pressure generator 330 provides the purge function, the pressure generator 330 may provide a pulsating pressure that provides a pressure at a time difference.

In addition, the recovery unit 300 may further include a vibrator 360 provided to transmit vibration to the drum portion 310 in order to remove the powder p attached to at least one of the drum portion 310 and the inlet port 313.

The vibrator 360 may transmit the vibration to the drum portion 310 in order to remove the powder p attached to at least one of the accommodating space inside the drum portion 310 and the inlet port 313 of the inner circumferential surface of the drum portion 310. When the vibration is transmitted to the drum portion 310, the powder p that is clustered inside the drum portion 310 or that is blocking the inlet port 313 falls, so that the powder p recovery efficiency of the recovery unit 300 may be increased.

As illustrated in FIG. 1, a mesh portion 400 for filtering out foreign substances contained in the powder may be provided between the cutting unit 100 and the introducing portion 21 of the main hopper 20. The mesh portion 400 may include a plurality of sieves having a predetermined size in which the powder p is capable of passing therethrough and foreign substances are capable of being filtered out.

After the packaging material 10 is cut, i.e., after the inner layer 11 is cut by the cutting unit 100, when the powder p contained in the inner layer 11 is introduced into the introducing portion 21 of the main hopper 20, the mesh portion 400 filters out foreign substances contained in the powder p, thereby being capable of increasing the purity of the powder p.

Hereinafter, the dust collector 340 and the collecting valve portion 350 that may be further included in the recovery unit 300 will be described.

The recovery unit 300 may further include: the dust collector 340 disposed on a first side of the collecting hopper 320 that is in communication with the pressure generator 330, the dust collector 340 being provided so as to pass air therethrough and to filter out the powder; and the collecting valve portion 350 provided on a communication portion between the collecting hopper 320 and the main hopper 20 such that the collecting valve portion 350 is capable of being opened and closed.

The dust collector 340 may be provided on the first side of the collecting hopper 320. The dust collector 340 may be disposed on a region of the collecting hopper 320 in communication with the pressure generator 330, and may be provided such that air is capable of passing therethrough and the powder p is filtered out.

When the pressure generator 330 transfers the powder p to the collecting hopper 320 by using the negative pressure, the powder p collected in the collecting hopper 320 may be introduced into the pressure generator 330 by the negative pressure, and the powder p may be prevented from being introduced into the pressure generator 330 by using the dust collector 340 provided in the region in communication with the pressure generator 330.

The dust collector 340 may be provided as an inverter-type dust collector in which an air content is capable of being adjusted. Accordingly, the dust collection amount of the dust collector 340 may be adjusted as required.

The pressure generator 330 may be operated for a predetermined time even after all of the powder p of the packaging material 10 is discharged. In addition, the pressure generator 330 may be operated until all of the powder p of the packaging material 10 is discharged and a gap between the lower flange portion 210 and the upper flange portion 220 is widened so that the packaging material 10 is free from the sealing unit 200. Accordingly, the recovery unit 300 may recover all powder p scattered even after the discharge of the powder p is finished.

The collecting valve portion 350 may be provided on the communication region of the collecting hopper 320 and the main hopper 20 such that the collecting valve portion 350 is capable of being opened and closed. The collecting valve portion 350 is closed in an environment in which the negative pressure is formed on the collecting hopper 320 by the operation of the pressure generator 330, and maintains the closed state so that the negative pressure does not affect the main hopper 20.

The collecting valve portion 350 may be opened by a controller 351 when the operation of the pressure generator 330 is finished and the powder p is collected in the collecting hopper 320. When the collecting valve portion 350 is opened, the powder p in the collecting hopper 320 may be moved to the main hopper 20. When all of the powder p is discharged from the packaging material 10 and all of the leaked powder p is collected in the collecting hopper 320, the collecting valve portion 350 may be opened once so as to supply the collected powder p to the main hopper 20, and then may be closed again.

Accordingly, the powder p leaked or scattered during the process of transferring the powder p from the packaging material 10 to the main hopper 20 may be temporarily stored in the collecting hopper 320 and then may be supplied to the main hopper 20.

Hereinafter, an action of the apparatus for introducing the active material for use in the secondary battery according to an embodiment of the present disclosure and another embodiment of the present disclosure will be described.

As illustrated in FIG. 5, in an embodiment and another embodiment according to the present disclosure, the upper flange portion 220 of the sealing unit 200 is lowered in a state illustrated in FIG. 1, and is in contact with the lower flange portion 210. Accordingly, when the skirt portion 14 of the outer layer 12 of the packaging material 10 is fixed by the sealing unit 200, the opening portion 13 of the packaging material 10 and the introducing portion 21 of the main hopper 20 are in communication with each other and the inside of the outer layer 12 of the packaging material 10 is closed, so that the powder p may be prevented from leaking outside the outer layer 12.

Then, when the lifting mechanism (not illustrated) that is lifting the packaging material 10 is moved downward, the packaging material 10 is lowered and the inner layer 11 of the packaging material 10 in which the powder p is accommodated may be cut by the cutting unit 100 due to the weight of the packaging material 10.

As the inner layer 11 of the packaging material 10 is cut, the powder p falls from the inner layer 11 to the introducing portion 21 of the main hopper 20. At this time, the powder p may be easily introduced into the introducing portion 21 when the packaging material 10 is shaken up and down or in the left and right directions by using the lifting mechanism.

When the powder p is introduced into the introducing portion 21, the scattered powder p is blocked by the outer layer 12 of the packaging material 10 that is closed by the sealing unit 200, so that the powder p is not leaked outside the outer layer 12, and may be introduced into the introducing portion 21 from inside the outer layer 12.

Even if some powder p is leaked outside the outer layer 12 of the packaging material 10, the leaked powder p may be moved to the collecting hopper 320 through the drum portion 310 of the recovery unit 300, and then may be recovered to the main hopper 20.

The present disclosure has been described in detail through specific embodiments. The embodiment is proposed to more concretely describe the present disclosure. However, the embodiment is only given for illustrating the present disclosure and those skilled in the related art will obviously understand that various alterations and modifications are possible within the scope and spirit of the present disclosure. Such alterations and modifications are duly included in the appended claims.

## Claims

1. An apparatus for introducing an active material for use in a secondary battery, the apparatus comprising:
a cutting unit positioned on an upper side of an introducing portion of a main hopper and provided for cutting a bottom portion of a packaging material in which a powder is accommodated; and
a sealing unit provided around an outside of the cutting unit and configured to block leakage of the powder by bringing the introducing portion of the main hopper and an opening portion of the packaging material formed by cutting to be in communication with each other.

2. The apparatus of claim 1, wherein the cutting unit comprises a knife member that protrudes toward the bottom portion of the packaging material.

3. The apparatus of claim 2, wherein the knife member is provided such that a height of the knife member is capable of being adjusted.

4. The apparatus of claim 2 or 3, wherein the knife member comprises a peak portion for cutting a bottom portion of an inner layer of the packaging material.

5. The apparatus of anyone of claims 1 to 4, wherein the sealing unit comprises:
a lower flange portion provided on the outside of the cutting unit so as to surround the cutting unit, the lower flange portion being provided such that a lower side of a skirt portion of an outer layer of the packaging material is positioned outside the lower flange portion; and
an upper flange portion positioned above the lower flange portion, the upper flange portion being provided with a penetration portion such that the lower side of the skirt portion of the outer layer of the packaging material is passing through and is positioned inside the penetration portion.

6. The apparatus of claim 5, wherein at least one of the lower flange portion and the upper flange portion is provided such that at least one of the lower flange portion and the upper flange portion is capable of being lifted toward each other, and the lower flange portion and the upper flange portion are configured to be brought into close contact with each other so that the lower side of the skirt portion of the outer layer of the packaging material moving to the outside of the lower flange portion from inside of the upper flange portion is pressed and fixed.

7. The apparatus of anyone of claims 1 to 6, wherein the apparatus for introducing the active material for use in the secondary battery further comprises a recovery unit provided so as to surround the sealing unit from an outside of the sealing unit, the recovery unit being configured to resupply the powder leaked from the packaging material to the main hopper.

8. The apparatus of claim 7, wherein the recovery unit comprises:
a drum portion surrounding the sealing unit from outside the sealing unit and having an accommodating space in which the powder that is leaked is introduced and accommodated;
a collecting hopper provided so as to be in communication with the main hopper and connected to the drum portion by at least one pressure line, the collecting hopper being configured to collect the powder in the drum portion; and
a pressure generator configured to provide a pressure to the collecting hopper so that the powder in the drum portion is moved to the collecting hopper.

9. The apparatus of claim 8, wherein the drum portion comprises at least two partition space portions partitioning and dividing the accommodating space into a plurality of spaces, and at least one of the pressure line is in communication with each of the partition space portions.

10. The apparatus of claim 8 or 9, wherein a plurality of inlet ports for introducing the powder into the accommodating space is provided on an inner circumferential surface of the drum portion.

11. The apparatus of claim 10, wherein the recovery unit further comprises a vibrator provided so as to transmit vibration to the drum portion so that the powder attached to at least one of the drum portion and the inlet portions is detached from at least one of the drum portion and the inlet portions.

12. The apparatus of anyone of claims 1 to 11, wherein a mesh portion for filtering out foreign substances contained in the powder is provided between the cutting unit and the introducing portion of the main hopper.

13. The apparatus of anyone of claims 8 to 12, wherein the recovery unit further comprises:
a dust collector disposed on a first side of the collecting hopper in communication with the pressure generator, the dust collector being configured to pass air therethrough and to filter out the powder; and
a collecting valve portion provided on a communication region of the collecting hopper and the main hopper, the collecting valve portion being capable of being opened and closed.
